**Europäisches Patentamt**

(19) **European Patent Office**

**Office européen des brevets**

(11) Publication number : **0 363 115 B1**

(12) **EUROPEAN PATENT SPECIFICATION**

(45) Date of publication of patent specification :
23.12.92 Bulletin 92/52

(51) Int. Cl.⁵ : **G01B 7/08**

(21) Application number : **89310034.7**

(22) Date of filing : **02.10.89**

(54) **Glass container wall thickness inspection apparatus.**

(30) Priority : **05.10.88 US 253828**
**05.10.88 US 253832**

(43) Date of publication of application :
**11.04.90 Bulletin 90/15**

(45) Publication of the grant of the patent :
**23.12.92 Bulletin 92/52**

(84) Designated Contracting States :
**DE FR GB IT**

(56) References cited :
**EP-A- 0 300 616**
**FR-A- 2 435 696**
**US-A- 3 684 089**
**US-A- 4 228 393**

(73) Proprietor : **Emhart Glass Machinery**
**Investments Inc.**
**c/o RL&F Service Corp. One Rodney Square,**
**10th Floor 10th and King Streets**
**Wilmington, Delaware 19801 (US)**

(72) Inventor : **Andersen, Robert P.**
**19 Pilgrim Lane**
**Monroe Connecticut 06468 (US)**
Inventor : **Scott, Paul F.**
**19 Capitol Avenue**
**Hartford Connecticut 06106 (US)**
Inventor : **Vozenilek, Edward F.**
**511 Pinewood Circle**
**Elmira New York 14901 (US)**
Inventor : **Baker, Russ J.**
**132 Overlook Drive**
**Horseheads New York 14845 (US)**
Inventor : **Hansen, Robert A.**
**P.O. Box 1902**
**Elmira New York 14902 (US)**

(74) Representative : **Wetters, Basil David Peter et al**
**Emhart Patents Department Lyn House 39 The Parade**
**Oadby, Leicester LE2 5BB (GB)**

Jouve, 18, rue Saint-Denis, 75001 PARIS

## Description

A bottle or container is formed from a gob of molten glass in an individual section glass container forming machine by first pressing or blowing the gob into a parison and then blowing the parison into the container. When glass is uniformly distributed in this process, wall thickness will be uniform, but when glass distribution is not uniform, thin spots can occur which may result in bottle failure during filling or handling.

The high dielectric constant of glass makes it possible to measure the electrical capacitance of the wall of a glass container located against two elongated electrodes of a sensor which contact the bottle as it is rolled along the sensor.

European Patent Application 300,616, applied for before the priority date of the present application but not published until after that date, discloses a glass container inspection apparatus for measuring the thickness of the wall of a bottle by use of a sensor in the form of an elongated electrode which is resiliently pressed against the bottle while the bottle is rolled along the electrode. This sensor is arranged to measure the capacitance of the portion of the wall of the container located against the sensor. This capacitance increases monotonically as the wall thickness increases and can be measured using an electronic circuit to convert the capacitance to a voltage. A voltage representative of the thickness of the wall can be continuously generated as the bottle rolls along the sensor, and if the voltage decreases below a selected volume, representing a minimum wall thickness, the bottle being inspected can be rejected.

However, there are problems in accurately measuring the small changes in capacitance caused by changes in wall thickness (typically of the order of $10^{-3}$ Picofarad change in measured capacitance per $10^{-3}$ $2.54 \times 10^{-5}$m change in wall thickness and the non-linear change in capacitance as a function of thickness over the desired range.

US A-4228 393 describes an apparatus for making measurements by capacitance determination, specifically an apparatus for determining the moisture content of tobacco, which comprises capacitance sensing means, a measuring oscillator for applying an oscillating voltage to the capacitance sensing means, a reference oscillator and phase detector means. In the operation of the apparatus the frequency of the reference oscillator is fixed, and the output of the measuring oscillator, whose frequency is affected by the capacitance of the tobacco being tested, is fed to the phase detector means, which forms part of a phase locked loop and feeds a voltage back to the measuring oscillator to adjust its frequency to that of the reference oscillator. This voltage provides a measure of the capacitance of the test specimen and thus of the moisture content.

Such a circuit has the shortcoming that temperature changes can cause variation in the frequency of the reference oscillator, thus necessitating a recalibration of the apparatus.

The present invention provides apparatus for making measurements by capacitance determination comprising

capacitance sensing means

a measuring oscillator for applying an oscillating voltage to the capacitance sensing means

a reference oscillator and

phase detector means

characterized in that

the apparatus is for use in determining the wall thickness of a glass container and comprises means for presenting a portion of the wall of a container to the capacitance sensing means,

the measuring oscillator generates a periodic voltage whose frequency is representative of the sensed capacitance

the reference oscillator is voltage controlled and with the phase detector means provides a phase locked loop, the outputs of the measuring oscillator and the reference oscillator being fed to the phase detector means

the output of the phase detector means is applied to the reference oscillator so that the reference oscillator and the measuring oscillator operate at the same frequency so that the voltage input to the reference oscillator is representative of the wall thickness of the container.

Preferably the capacitance sensing means is elongated sensing and the means for presenting the container is arranged to roll the container along the elongated surface.

There now follows a description, to be read with reference to the accompanying drawings, of a preferred embodiment of a glass container inspection apparatus chosen to illustrate the invention by way of example.

In the accompanying drawings:

Figure 1 shows, diagrammatically, an inspection station of a glass container inspection apparatus;

Figure 2 is a logic diagram illustrating the operation of a controller of the apparatus to determine whether or not a container should be rejected;

Figure 3 shows, diagrammatically, mechanism for moving containers through the inspection station;

Figure 4 is a logic diagram illustrating steps to eliminate the effect of a side seam on inspection;

Figure 5 shows a container with a side seam and diagrammatically the effect of the logic illustrated in Figure 4;

Figure 6 is a schematic diagram illustrating the electronic circuit of the inspection apparatus.

The illustrative glass container inspection apparatus is for measuring the thickness of a wall of a container, for example a round glass bottle, by use of capacitance sensing means which produces a signal representative of the thickness of the wall of a bottle presented to it.

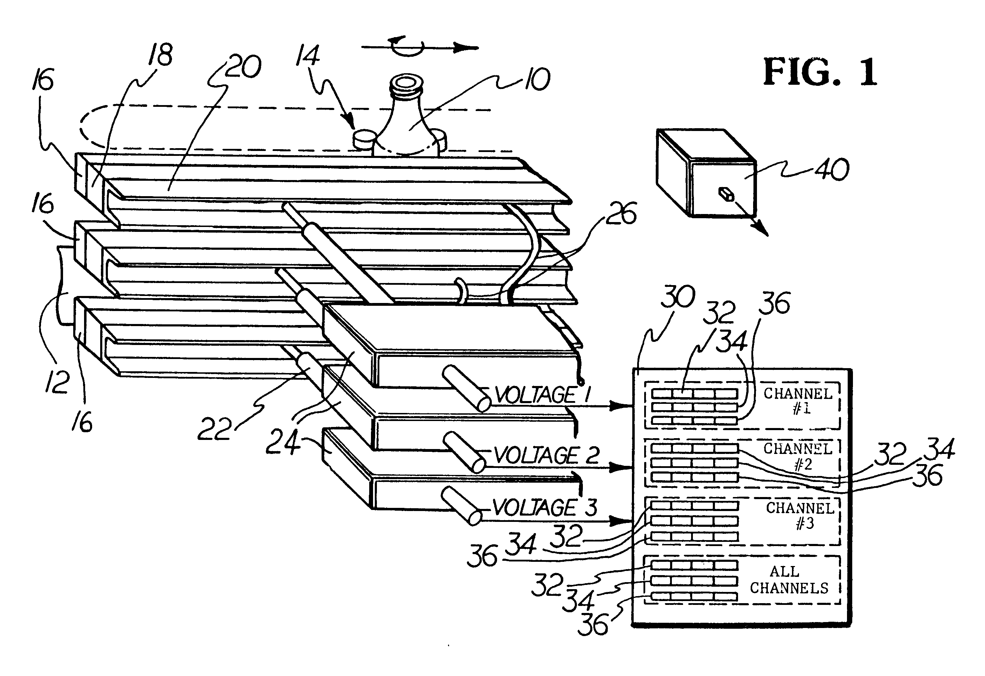

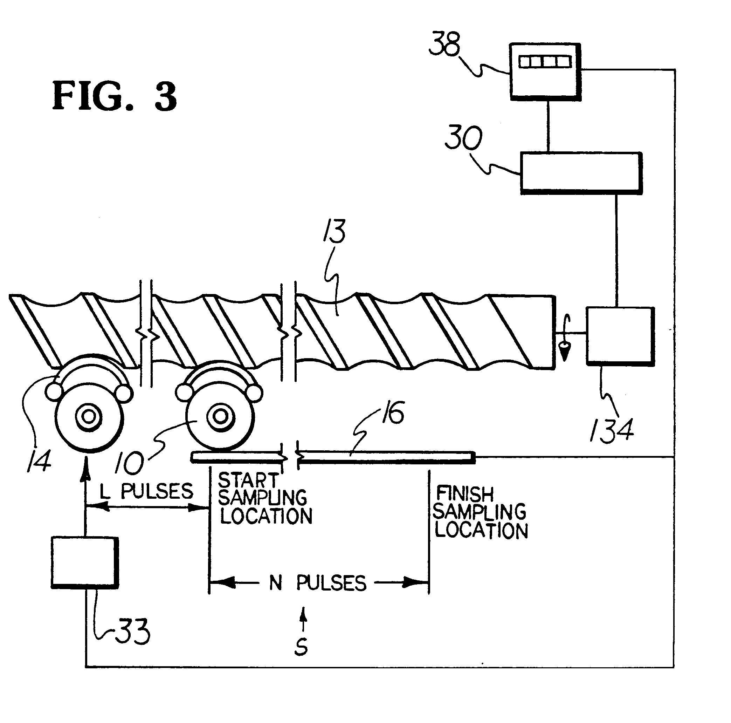

The illustrative apparatus comprises means for presenting a glass bottle to the sensing means so that its wall thickness may be sensed comprising bottle carriers 14 (Figures 1 and 3) which engage round glass bottles 10 supported on a plate 12. The carriers 14 are engaged by an elongated cam 13 which is rotated at a constant speed to carry the bottles in turn through an inspection station S. As each carrier 14 carries a bottle 10 through the inspection station S it rolls the bottle along a number (three as illustrated in Figure 1 for purposes of clarity, but four are normally used) of parallel horizontally extending, vertically spaced, elongated capacitance sensors 16 in the form of strips which are secured to resilient foam strips 18 mounted on suitable brackets 20. The brackets are connected by posts 22 to corresponding head oscillator assembly housings containing oscillator assemblies 24. Each oscillator assembly 24 receives a capacitance signal from its associated capacitance sensor 16 via a calibrated cable 26 and generates a continuous voltage signal which is supplied to a computer 30.

When the cam 13 carries a carrier 14 towards the inspection station S a start position of the carrier 14 is sensed by a suitable sensor 33. The rotational position of the cam 13 is monitored by an encoder 134 the encoder reading when the carrier 14 is at the start position is defined as the start pulse by the computer 30. As the cam continues to advance the carrier 14, a captured bottle 10 will be translated towards the right until the bottle engages the capacitance sensor 16 and reaches the beginning of the inspection station, as defined by a selected encoder pulse count (L). The sampling will then begin with a data sample being evaluated by the computer 30 at each subsequent count until the count reaches a selected number (N) which assures that the entire periphery of the bottle has been sampled (the Finish Sampling Location). For smaller bottles, a portion of this peripheral ring may be analysed twice. The operator inputs the diameter of the bottle via a hand held terminal or the like 38, and the computer sets the correct number (N) of pulses for the bottle.

The computer 30 of the illustrative apparatus comprises an array of settable thumb wheel switches 32, 34, 36 associated with each capacitance sensor, the switches 32 being adapted for setting a minimum wall thickness, the switches 34 a maximum wall thickness and the switches 36 a minimum/maximum wall thickness ratio.

Glass thickness measurements are made using each sensor 16 and cable 26 which have a capacitance about 50 pf without glass being sensed. The sensitivity of the sensor 16 to glass is about 0.002 pf of capacitance for each $10^{-5}$ m of glass and decreases as glass thickness increases.

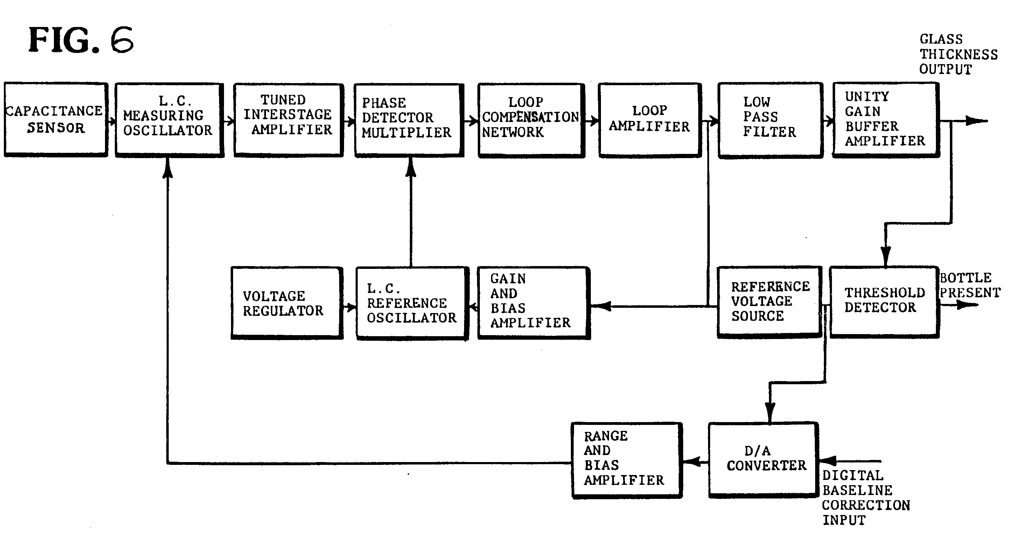

Each oscillator assembly 24 comprises [see Figure 6] a capacitance tuned Measuring Oscillator (a transformer coupled LC oscillator) formed by placing the sensor 16 in parallel with a ferrite pot core inductor which has an extra winding for feed-back. This measuring oscillator is tuned by the capacitance of the sensor and accordingly converts small changes in capacitance (a change in bottle thickness) to small changes in frequency. This output frequency is passed to a Tuned Interstage Amplifier which rejects signals that are outside the frequency range of interest. A capacitance tuned Reference Oscillator which is identical to the Measuring Oscillator is formed using an identical inductor and a stable capacitor that equals the no glass capacitance of the sensor and cable assembly.

To each oscillator is added some additional capacitance in the form of a varactor (a capacitor in series with a reversed biased tuning diode). The network values are chosen so that the diode can be biased by means of a biasing resistor over a range of voltages (from -3 to -10 volts). The value of the capacitance change due to the network and varactor is chosen to be approximately equal to the change in capacitance for the largest glass thickness expected.

Preferably the varactor bias of the Measuring Oscillator is set as a starting point approximately to the mid-point of its range and the bias of the varactor in the Reference Oscillator is set to its minimum point (-10 volts in the above example).

As will now be described, the computer 30 is arranged to be responsive to reject bottles if the signals produced by the sensors 16 indicate that the thickness of the wall of the container is, at any sensed point, greater than a selected maximum value or less than a selected minimum value or if the ratio of the signals representing the minimum sensed wall thickness to the maximum wall thickness is lower than a selected value.

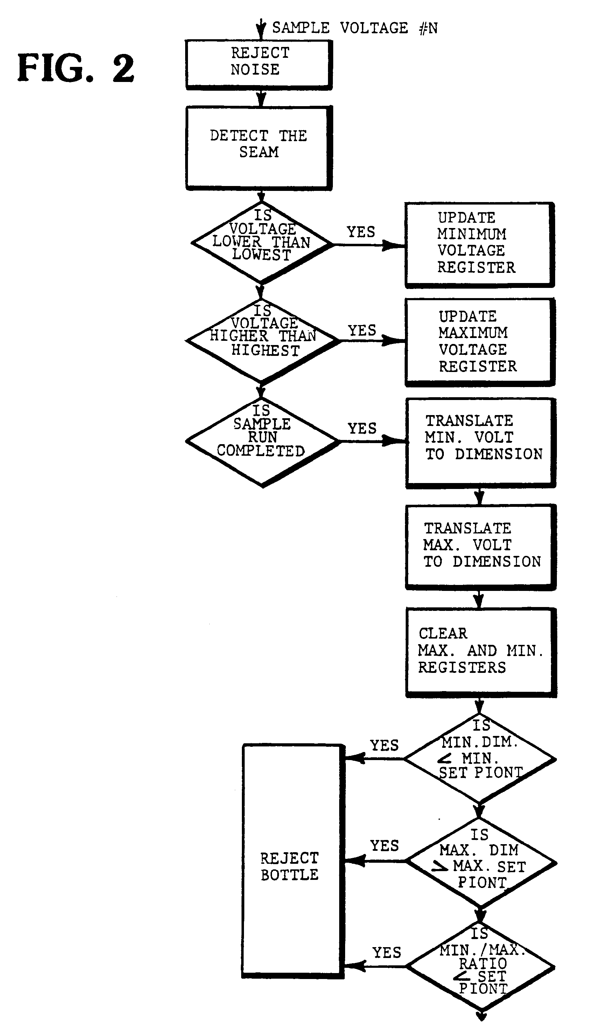

As can be seen from the logic diagram illustrated in Figure 2, in the computer 30 the voltage signal generated by each oscillator assembly is processed to Reject Noise (by averaging, for example). A Detect The Seam circuit determines that data in the vicinity of a seam is being generated and ignores this data which would produce a false thin spot reading, as will be described in more detail later. Two to three hundred readings or data samples are taken around the bottle at each sensor and then evaluated to identify the lowest and highest voltage around the bottle. These voltages are stored in suitable registers which are updated whenever a lower or higher voltage is sensed until readings have been taken completely around the bottle. A highest voltage and lowest voltage register can be provided for each sensor (channel) and a highest and lowest register can be provided for the data of all the sensors (channels). At this time, the voltage which represents the thinnest spot around the tested periphery (either for one or for all channels) and the voltage which represents the thickest spot around the tested periphery (either for one or for all channels) are converted via suitable A/D converters to dimensions (millimeter for example) and the registers are cleared for the next bottle. If the minimum dimension is less than the minimum set point, or if the maximum dimension is higher than the maximum set point or if the minimum to maximum ratio for these two dimensions is less than the minimum to maximum set point, the bottle will be rejected by a suitable reject mechanism 40, diagrammatically indicated in Figure 1.

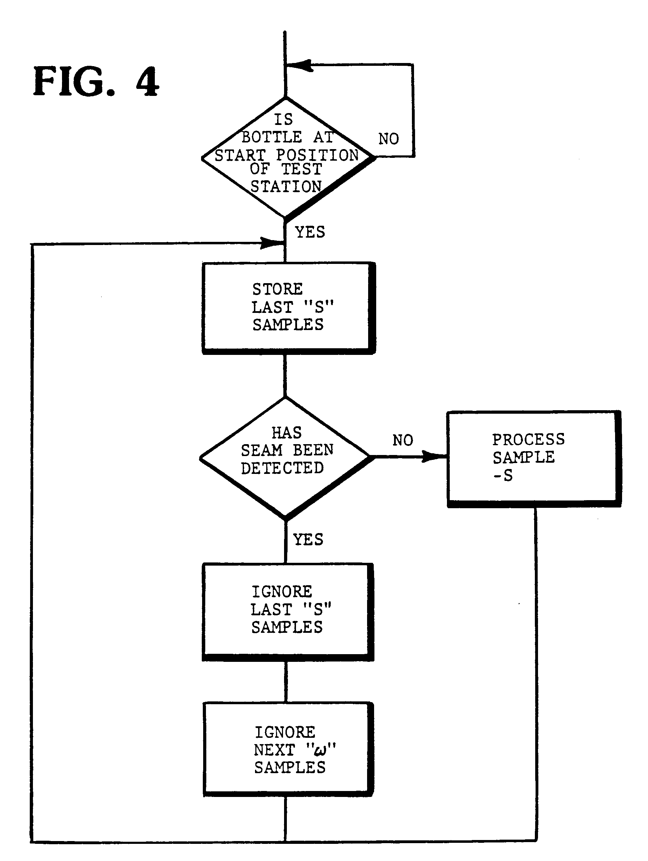

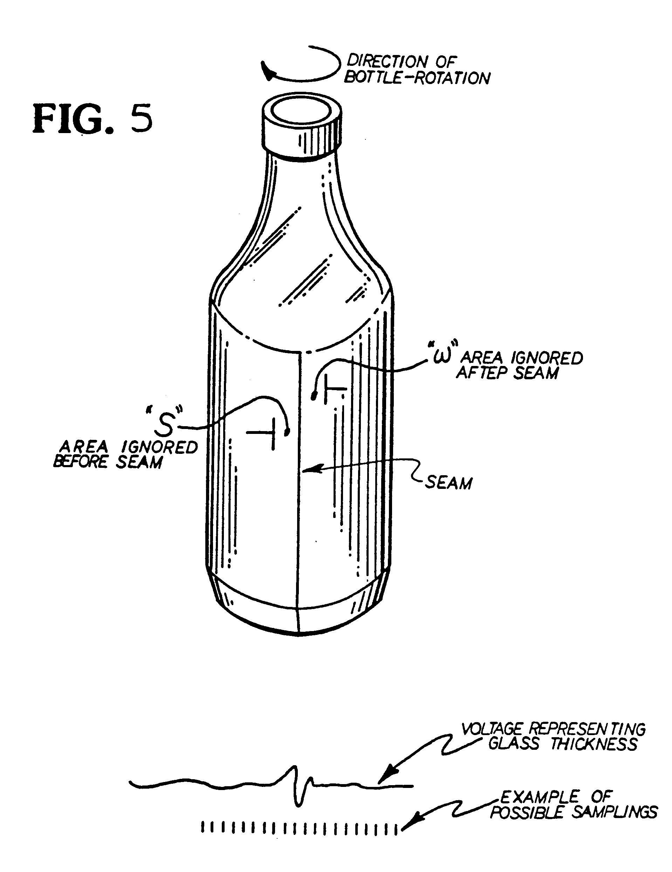

As can be seen from Figures 4 and 5, the last "S" (four, for example) data samples are stored in a Store Case "S" Sample and each time a new data sample is placed in storage, the oldest data sample will accordingly be evaluated at each pulse until the bottle wall seam has been detected by the computer 30 in a conventional manner; i.e. the computer 30 determines the rate of change or differential of the voltage representing glass thickness and whenever this differential exceeds a selected threshold, a seam has been detected. Thus the computer 30 includes a seam detector means. At this time, all the sample data in the Store Case "S" samples will be ignored as will future data samples for a "W" pulse count. "S" and "W" are settable, via a conventional computer input such as a keyboard, to cover a selected window during which seam data would normally be evaluated. Following the counting of "W" pulses, the sample data will again be evaluated each pulse until the Finish Sampling Location is reached.

Returning now to a more complete description of the capacitative wall thickness sensing circuit of Figure 6. A Phase Locked Loop is formed to adjust the voltage to exactly match the capacitance of the sensor and glass to the reference capacitance (the varactor) of the Reference Oscillator by coupling the two oscillator outputs with a Phase Detector Multiplier. The detected phase is fed to a Loop Compensation Network (a band width shaping filter) and Amplifier. Due to the gain of the Amplifier, a small error in phase will result in a substantial output voltage. The Loop is closed through a Gain and Bias Amplifier which is set as follows: When the amplifier output is at the desired minimum (0 volts in the illustrated case), the varactor is set to minimum capacitance (-10 volts to the varactor). The gain is set so that the desired maximum out of the amplifier (5 volts) sets the varactor to the maximum capacitance (-3 volts to the varactor).

The Phase Locked Loop is closed to force the Measuring Oscillator and the Reference Oscillator to operate at exactly the same frequencies. When no glass is sensed by the sensor, the frequencies are equal when the Reference Oscillator varactor is at minimum, so that the output of the Loop Amplifier is zero. As glass is sensed by the sensor, the output of the Loop Amplifier causes the varactor in the Reference Oscillator to change capacitance an amount exactly equal to the change in the Measuring Oscillator capacitance due to the glass wall thickness. The capacitance versus voltage characteristics of the varactor are known, and accordingly, this data can be inverted to form a voltage versus capacitance chart. Varactor capacitance varies slowly as a function of applied voltage. This chart is further shifted to a more convenient voltage scale by the action of the Gain and Bias Amplifier.

The varactor voltage versus capacitance curve is non-linear. A shift in the bias point of the varactor would cause an undesirable shift in scale factor within this scheme. Accordingly, when changes occur that shift the no glass value from the desired set point, a change in voltage is made to the varactor in the Measuring Oscillator. Since the predominant changes that occur are due to temperature, the control input can be referred to as the temperature compensating input. This preserves the scale of the phase locked output.

The glass thickness signal is obtained by passing the output of the Phase Locked Loop through a limiting Low Pass Filter and a Unity Gain Buffer Amplifier. From there, it goes to an A/D Converter and thence to the computer.

Samples that correspond to no glass are processed through a feedback algorithm that makes adjustments to a D/A converter. This keeps the base frequency of both Oscillators at the same frequency, i.e., when no glass is present, the frequency will remain fixed at a selected value even with temperature changes and stray capacitance.

The Measuring Oscillator is applied as the input to a phase lock Loop where the Reference Oscillator is used as the voltage controlled oscillator (VCO) because the phase locked loop tunes the VCO allowing no steady state frequency error between it and the input frequency, the capacitance of the reference capacitance must precisely match the capacitance of the sensor/bottle combination. The voltage across the reference provides a good representation of the bottle's wall thickness, limited in practice only by the match between the Measuring Reference Oscillators and by the temperature drift coefficient and sensitivity of the varactor.

Since there is a non-linear change in capacitance as a function of thickness over the range provided by glass containers, the computer comprises a linearizer which is arranged to adjust the voltage output of the measuring oscillator means so that the voltage is linearly related to the sensed wall thickness.

The linearizer uses basic non-linear regression techniques combined with a "good sense" model of the capacitance-wall thickness relationship. While regression techniques are well known, it is also well known that their success depends on a correct choice of model. If the model does not represent the data with sufficient accuracy, the results of the regression will not be accurate. Also, it is very difficult to postulate a "good" model. The relationship between the sensor capacitance and the wall thickness of the container is very non-linear. This situation cannot be improved by better sensor design because the required circumferential resolution of the measurement is of the same order of magnitude as the wall thickness. Thus, the electric fields in the container must fall-off substantially over the range of container wall thicknesses, creating a proportionately non-linear capacitance function. The relationship between wall thickness and capacitance cannot be obtained analytically as it is a three-dimensional solution of Maxwell's equations for highly non-idealized geometries. Computer numerical solutions are possible, and while these provide insight into sensor design, they are too cumbersome and time consuming to use in a wall thickness instrument to determine the thickness value corresponding to a measured capacitance. However, as the relationship between thickness and capacitance must be linear for small thickness and as the thickness increases, the capacitance will approach some "infinite thickness" value. Assuming that the "cross-over" point between these two solutions occurs at a thickness value on the order of half the probe spacing a model can be proposed which has been shown empirically to represent wall thickness data very well. This model is as follows:

$$C(T) = A \times T / (1 + B \times T)$$

where:
C is the measured capacitance, T is the wall thickness, A is a coefficient describing the small thickness, linear relationship and B is a coefficient describing the large thickness, non-linear relationship. The "infinite thickness" capacitance is A/B and cross-over wall thickness is 1/B. This model is also easy to employ in a wall thickness device because "pseudo" linear regression techniques can be used to calculate A and B from two or more known pairs (for example determined experimentally) of C and T. The model can also be used to express T in terms of C, i.e.

$$T = \frac{C}{A - BC}$$

## Claims

1. Apparatus for determining the wall thickness of a glass container by measuring capacitance comprising
   capacitance sensing means (16)
   a measuring oscillator for applying an oscillating voltage to the capacitance sensing means
   a reference oscillator and
   phase detector means
   characterized in that
   the apparatus comprises means (14,13) for presenting a portion of the wall of a container to the capacitance sensing means (16),
   the measuring oscillator generates a periodic voltage whose frequency is representative of the sensed capacitance
   the reference oscillator is voltage controlled and with the phase detector means provides a phase locked loop, the outputs of the measuring oscillator ant the reference oscillator being fed to the phase detector means
   the output of the phase detector means is applied to the reference oscillator so that the reference oscillator and the measuring oscillator operate at the same frequency so that the voltage input to the reference oscillator is representative of the wall thickness of the container.

2. Apparatus according to claim 1 characterized in that
   the capacitance sensing means is elongated and the means for presenting the container is arranged to roll the container along the elongated surface.

3. Apparatus according to claim 1, comprising linearizer means for linearizing said voltage representative of the dimension of the object.

4. Apparatus according to claim 3, wherein the linearizer means comprises means for adjusting the output of the measuring oscillator means.

## Patentansprüche

1. Gerät zum Bestimmen der Wanddicke eines Glasbehälters durch Messen einer Kapazität, wobei das Gerät umfaßt:
   eine Kapazitätserfassungseinrichtung (16),
   einen Meßoszillator zum Anlegen einer oszillierenden Spannung an die Kapazitätserfassungseinrichtung,
   einen Referenzoszillator, und
   eine Phasendetektoreinrichtung,
       **dadurch gekennzeichnet**, daß
       das Gerät eine Einrichtung (14, 13) zum Darbieten eines Teils der Wand eines Behälters der Kapazitätserfassungseinrichtung (16), der Meßoszillator eine periodische Spannung erzeugt, deren Frequenz für die erfaßte Kapazität repräsentativ ist,
   der Referenzoszillator spannungsgesteuert ist und mit der Phasendetektoreinrichtung eine phasenverriegelte Schleife erzeugt, wobei die Ausgänge des Meßoszillators und des Referenzoszillators zu der Phasendetektoreinrichtung geführt werden,
   der Ausgang der Phasendetektoreinrichtung an den Referenzoszillator angelegt wird, so daß der Referenzoszillator und der Meßoszillator bei der gleichen Frequenz arbeiten, so daß der Spnannungseingang zu dem Referenzoszillator die Wanddicke des Behälters darstellt.

2. Gerät nach Anspruch 1, dadurch gekennzeichnet, daß die Kapazitätserfassungseinrichtung verlängert ist und die Einrichtung zum Darbieten des Behälters vorgesehen ist, um den Behälter entlang der verlängerten Oberfläche zu rollen.

3. Gerät nach Anspruch 1, das eine Linearisiereinrichtung zum Linearisieren der Spannung umfaßt, die die Dimension des Gegenstands darstellt.

4. Gerät nach Anspruch 3, wobei die Linearisiereinrichtung eine Einrichtung zum Einstellen des Ausgangs der Meßoszillator-Einrichtung umfaßt.

## Revendications

1. Appareil destiné à exécuter des mesures par détermination de la capacité, comprenant :

    des moyens (16) capteurs de capacité,

    un oscillateur de mesure servant à appliquer une tension oscillante aux moyens capteurs de capacité,

    un oscillateur de référence et,

    des moyens détecteurs de phase,

    et caractérisé en ce que :

    il est destiné à être utilisé pour déterminer l'épaisseur de paroi d'un récipient en verre et il comprend des moyens servant à présenter une partie de la paroi d'un récipient aux moyens (16) capteurs de capacité,

    l'oscillateur de mesure engendre une tension périodique dont la fréquence est représentative de la capacité captée,

    l'oscillateur de référence est commandé par une tension et forme une boucle à blocage de phase avec les moyens détecteurs de phase, les signaux de sortie de l'oscillateur de mesure et de l'oscillateur de référence étant transmis aux moyens détecteurs de phase,

    le signal de sortie des moyens détecteurs de phase est appliqué à l'oscillateur de référence de manière que l'ocillateur de référence et l'oscillateur de mesure opèrent à la même fréquence, de sorte que la tension d'entrée à l'oscillateur de référence est représentative de l'épaisseur de paroi du récipient.

2. Appareil selon la revendication 1, caractérisé en ce que les moyens capteurs de capacité sont de forme allongée et les moyens servant à présenter le récipient sont agencés pour faire rouler le récipient le long de la forme allongée.

3. Appareil selon la revendication 1, comprenant des moyens "linéariseurs" servant à linéariser cette tension représentative de la dimension de l'objet.

4. Appareil selon la revendication 3, dans lequel les moyens "linéariseurs" comprennent des moyens servant à ajuster des moyens formant oscillateur de mesure.

FIG. 1

VOLTAGE 1

VOLTAGE 2

VOLTAGE 3

CHANNEL #1

CHANNEL #2

CHANNEL #3

ALL CHANNELS

EP 0 363 115 B1

**FIG. 2**

SAMPLE VOLTAGE #N

REJECT
NOISE

DETECT THE
SEAM

IS
VOLTAGE
LOWER THAN
LOWEST — YES → UPDATE
MINIMUM
VOLTAGE
REGISTER

IS
VOLTAGE
HIGHER THAN
HIGHEST — YES → UPDATE
MAXIMUM
VOLTAGE
REGISTER

IS
SAMPLE
RUN
COMPLETED — YES → TRANSLATE
MIN. VOLT
TO DIMENSION

TRANSLATE
MAX. VOLT
TO DIMENSION

CLEAR
MAX. AND MIN.
REGISTERS

YES ← IS
MIN.DIM.
< MIN.
SET PIONT

REJECT
BOTTLE

YES ← IS
MAX. DIM
> MAX. SET
PIONT

YES ← IS
MIN./MAX.
RATIO
< SET
PIONT

# FIG. 3

# FIG. 4

IS
BOTTLE AT
START POSITION
OF TEST
STATION

NO

YES

STORE
LAST "S"
SAMPLES

HAS
SEAM BEEN
DETECTED

NO

PROCESS
SAMPLE
-S

YES

IGNORE
LAST "S"
SAMPLES

IGNORE
NEXT "$\omega$"
SAMPLES

**FIG.** 5

DIRECTION OF
BOTTLE-ROTATION

"ω" AREA IGNORED
AFTEP SEAM

"S"
AREA IGNORED
BEFORE SEAM

SEAM

VOLTAGE REPRESENTING
GLASS THICKNESS

EXAMPLE OF
POSSIBLE SAMPLINGS

**FIG. 6**

GLASS
THICKNESS
OUTPUT

CAPACITANCE SENSOR → L.C. MEASURING OSCILLATOR → TUNED INTERSTAGE AMPLIFIER → PHASE DETECTOR MULTIPLIER → LOOP COMPENSATION NETWORK → LOOP AMPLIFIER → LOW PASS FILTER → UNITY GAIN BUFFER AMPLIFIER

VOLTAGE REGULATOR — L.C. REFERENCE OSCILLATOR ← GAIN AND BIAS AMPLIFIER ← REFERENCE VOLTAGE SOURCE — THRESHOLD DETECTOR

BOTTLE PRESENT

RANGE AND BIAS AMPLIFIER ← D/A CONVERTER

DIGITAL BASELINE CORRECTION INPUT

EP 0 363 115 B1